# EUROPEAN PATENT SPECIFICATION

(11) **EP 4 346 255 B1**
(45) Date of publication and mention of the grant of the patent: **25.02.2026**
(21) Application number: 22198628.4
(22) Date of filing: 29.09.2022
(51) Int. Cl.: H04W 12/041, H04W 12/0471, H04W 76/12, H04L 9/08, H04L 67/02, H04W 84/06, H04L 9/40, H04L 69/16

(54) **ENCRYPTED SATELLITE COMMUNICATIONS**
VERSCHLÜSSELTE SATELLITENKOMMUNIKATION
COMMUNICATIONS CHIFFRÉES PAR SATELLITE

(43) Date of publication of application: 03.04.2024
(73) Proprietor: Cysec SA, 1003 Lausanne (CH)
(72) Inventor: Roelvink, Yannick, 1020 RENENS VD (CH); Emna, Amri, 1227 CAROUGE GENEVE (CH)
(74) Representative: Plasseraud IP

(56) References cited:
- ABDELSALAM A ET AL: "QUIC-proxy based architecture for satellite communication to enhance a 5G scenario", 2019 INTERNATIONAL SYMPOSIUM ON NETWORKS, COMPUTERS AND COMMUNICATIONS (ISNCC), IEEE, 18 June 2019 (2019-06-18), pages 1 - 6, XP033663148, [retrieved on 20191120], DOI: 10.1109/ISNCC.2019.8909181
- HU XIAOKANG HXKCMP@SJTU EDU CN ET AL: "QTLS high-performance TLS asynchronous offload framework with Intel QuickAssist technology", PROCEEDINGS OF THE 17TH ACM CONFERENCE ON INTERNATIONAL COMPUTING EDUCATION RESEARCH, ACMPUB27, NEW YORK, NY, USA, 16 February 2019 (2019-02-16), pages 158 - 172, XP058617452, ISBN: 978-1-4503-8368-4, DOI: 10.1145/3293883.3295705
- NIR CHECK POINT S JOSEFSSON SJD AB M PEGOURIE-GONNARD ARM Y: "Elliptic Curve Cryptography (ECC) Cipher Suites for Transport Layer Security (TLS) Versions 1.2 and Earlier; rfc8422.txt", ELLIPTIC CURVE CRYPTOGRAPHY (ECC) CIPHER SUITES FOR TRANSPORT LAYER SECURITY (TLS) VERSIONS 1.2 AND EARLIER; RFC8422.TXT, INTERNET ENGINEERING TASK FORCE, IETF; STANDARD, INTERNET SOCIETY (ISOC) 4, RUE DES FALAISES CH- 1205 GENEVA, SWITZERLAND, 7 August 2018 (2018-08-07), pages 1 - 34, XP015126374, [retrieved on 20180807]
- KIM DUCKWOO 0731KDW@KAIST AC KR ET AL: "A Case for SmartNIC-accelerated Private Communication", 4TH ASIA-PACIFIC WORKSHOP ON NETWORKING, ACMPUB27, NEW YORK, NY, USA, 3 August 2020 (2020-08-03), pages 30 - 35, XP058458563, ISBN: 978-1-4503-8876-4, DOI: 10.1145/3411029.3411034

## Description

### Background

### Technical field

The present application relates to the provision of encrypted wireless communications via satellite. More specifically, the application relates to a method for the provision of encrypted wireless communications via a commercial satellite link and an associated apparatus for performing the method.

### Related art

Satellite communications are a critical part of security and defence-related governmental communications (Govsatcom) with many use cases that can include surveillance, crisis management, critical infrastructure management, border control and election monitoring. Govsatcom traffic is predicted to undergo a 25-fold increase by 2040 with civilian applications representing the vast majority of the usage (~80%). Consequently, solutions must be found to accommodate that traffic increase. While some private satcom providers offer dedicated governmental services, these are expensive, and they tend to only run on a small portion of the available bandwidth. This raises concerns about availability. Additionally, the user must still trust the provider, and this raises concerns about security, in particular data confidentiality.

Using commercial satellite communication (Comsatcom) capabilities for governmental users would solve most of the issues described above. However, a major obstacle to making Comsatcom accessible to governmental users is the level of security. This is because existing commercial implementations suffer from various identified security weaknesses that need to be addressed.

The main reason behind the lack of security in existing Comsatcom is that most satellite Internet Service Providers (ISPs) do not offer over-the-air encryption in their satellite networks. This is because known techniques, such as VPN, significantly impact the performances of the link, typically increasing the latency.

Document: ABDELSALAM A ET AL, "QUIC-proxy based architecture for satellite communication to enhance a 5G scenario", 2019 INTERNATIONAL SYMPOSIUM ON NETWORKS, COMPUTERS AND COMMUNICATIONS (ISNCC), IEEE, (20190618), doi:10.1109/ISNCC.2019.8909181, relates to QUIC-proxy use in satellite communications. Document: HU XIAOKANG HXKCMP@SJTU EDU CN ET AL, "QTLS high-performance TLS asynchronous offload framework with Intel QuickAssist technology", PROCEEDINGS OF THE 17TH ACM CONFERENCE ON INTERNATIONAL COMPUTING EDUCATION RESEARCH, ACMPUB27, NEW YORK, NY, USA, (20190216), doi:10.1145/3293883.3295705, ISBN 978-1-4503-8368-4, relates to use of QAT in communications. Document: NIR CHECK POINT S JOSEFSSON SJD AB M PEGOURIE-GONNARD ARM Y, "Elliptic Curve Cryptography (ECC) Cipher Suites for Transport Layer Security (TLS) Versions 1.2 and Earlier; rfc8422.txt", ELLIPTIC CURVE CRYPTOGRAPHY (ECC) CIPHER SUITES FOR TRANSPORT LAYER SECURITY (TLS) VERSIONS 1.2 AND EARLIER; RFC8422.TXT, INTERNET ENGINEERING TASK FORCE, IETF; STANDARD, INTERNET SOCIETY (ISOC) 4, RUE DES FALAISES CH- 1205 GENEVA, SWITZERLAND, (20180807), relates to Elliptic curve cryptography.

It is an aim of the present invention to solve or mitigate at least some of the above-described problems.

### Summary

In a first aspect, there is provided a method according to claim 1

Thus, by using a hardware-based cryptoprocessor, the method can be implemented in a highly secure manner.

In embodiments, the transport-layer session operates outside of the secure processing environment and the software interface operating in the secure processing environment communicates with the transport-layer session indirectly via a second software interface operating outside of the secure processing environment. Thus, even though the transport-layer session is operating outside of the secure processing environment, it can communicate with the hardware-based cryprtoprocessor in a secure manner without requiring extensive modification to the transport-layer session.

In some embodiments, the transport-layer session is a QUIC session, and the method further comprising receiving payload data to be transmitted in the form of a TCP connection and transmitting the received payload data via an encrypted QUIC stream. Thus, a standard network protocol can be employed, and the method can receive data in a format that is typical of internet data.

In some embodiments, the QUIC stream comprises a plurality of multiplexed connections. Thus, the method can allow a high throughput of data and transmit data from multiple user devices via a single stream.

In some embodiments, the generated public-private key pair comprises a static key pair and an ephemeral key pair and wherein the transmission of the message comprises transmitting a message including the static public key and transmitting a message including the ephemeral public key. Thus, the method can provide means to both encrypt data and authenticate the remote device with which it is communicating.

In some embodiments, the transmission of a message including the public key forms part of a Transport Layer Security (TLS) version 1.3 handshake procedure. In some embodiments, the public key is transmitted in the first message of the handshake procedure. Thus, the method can employ a highly time-efficient handshake procedure that can be completed in a lower number of round trips than would be possible using TCP

In some embodiments, the method is partly performed in software and wherein the integrity of the software is verified upon booting using information from the hardware-based cryptoprocessor. In some embodiments, the secure processing environment (305) in combination with the hardware-based cryptoprocessor (307) carries out all processes that use the cryptographic keys. In some embodiments, the software is immutable. Thus, the method can be highly resistant to external attack.

In a second aspect, there is provided a secure router apparatus according to claim 10.

In some embodiments, the cryptoprocessor comprises a Trusted Platform Module, TPM. In some embodiments the TPM is a certified device. Thus, a low-cost device can be used to achieve the level of security required.

In some embodiments, the hardware cryptoprocessor (307) is configured to communicate with the transport-layer session via a software interface (323) operating in a secure processing environment (305) that is implemented using an ARM TrustZone security extension. Thus, a low-cost processing system can be used to achieve the level of security required.

In further aspects there is provided a computer program product comprising computer readable instructions which, when implemented on a system comprising a processor and a hardware cryptoprocessor perform all of the steps of the method of the first aspect, and a computer readable medium comprising such a computer program.

### Brief description of the drawings

The invention will now be described with reference to the accompanying Figures of which:
Figure 1 illustrates a satellite communication system of the prior art.
Figure 2 illustrates a satellite communication system according to embodiments.
Figure 3 shows details of the router used in the system of figure 2.
Figure 4 illustrates details of the method of operation of the router of figure 3.
Figure 5 illustrates details of an alternative method of operation of the router of figure 3.
Figure 6 illustrates details of a server for use with the router of figure 3.
Figure 7 illustrates operation results of the communication system of figure 2.

### Detailed Description

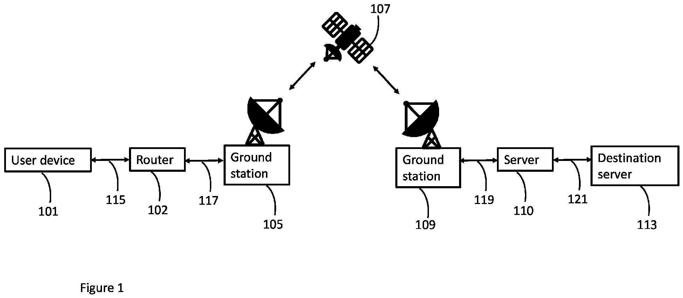

Figure 1 illustrates a typical scenario in the prior art in which a user device 101 is in communication with a destination server 113 via a satellite 107. The user device 101 could be any type of user device, such as a computer workstation, laptop, mobile telephone, tablet computer or internet of things (IoT) device. The destination server 113, could be any server device that permits external communications, such as an internet server.

In the prior art, the user device 101 will communicate 115 with a first satellite ground station 105 via a router 102. The communications will be enacted using one or more communications protocols that enable the transport of data from the user device 101 to a router and then to a first satellite ground station 105. This transportation of data will typically occur via the internet and may be implemented in a wired or wireless manner, or in some combination of the two. The first satellite ground station includes a modem device and will use this to transmit the data to the satellite 107, which in turn will transmit the data to a second ground station 109. The transmission of data between the satellite 107 and the ground stations 105, 109, can be achieved using Transmission Control Protocol, TCP, or another protocol, such as DVB or ATSC.

The second ground station 109 will transmit the data to a server 110 and then onto a destination server 113, again this transmission can be achieved using one or more communications protocols that enable the transport of data.

When transmitting data via the internet, if encryption is to be used, then a virtual private network (VPN) can be employed. VPNs tend to cause a small reduction in available bandwidth when implemented in terrestrial internet connections but tend to have a large detrimental effect when satellite communications are used. Much of this detrimental effect arises because of the large latency associated with transmission to and from a geostationary satellite. Whilst this latency can be reduced by using satellites in low earth orbit, this would come at the expense of an increase in system complexity. Thus, the architecture illustrated in Figure 1 is generally not suited to transmission of encrypted data using known techniques.

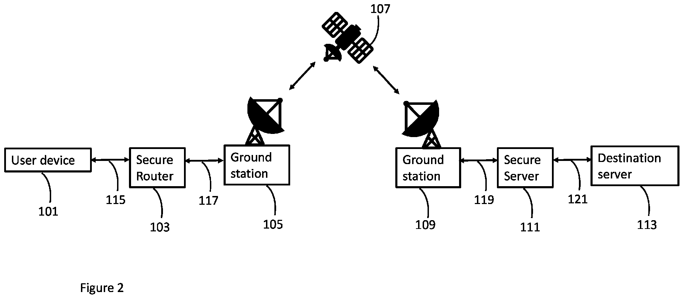

Figure 2 illustrates an architecture according to an embodiment. As with the architecture of Figure 1, the user device 101 is configured to communicate with a destination server 113. However, in the architecture of the embodiment, the user device 101 is configured to communicate 115 with a secure router 103 which is located between the user device 101 and the first ground station 105. The secure router 103 can be located at the premises of the first ground station 105, at the premises where the user device 101 is located, or at some other location. In some embodiments, the secure router 103 can form part of the user device 101. In other embodiments, the secure router 103 can form a part of a satellite modem located at the first ground station 105.

The user device 101 communicates 115 with the secure router 103 using one or more communications protocols that enable the transport of data. In some embodiments, the protocol is TCP over ethernet or Wi-Fi. In further embodiments, the protocol is Bluetooth, WIMAX or LoRa.

In embodiments where the secure router 103 is located with the user device, for example within a private network on which the user device 101 is also present, then communications between the user device 101 and the secure router 103 need not be encrypted. Conversely, in embodiments where the user device 101 is remote from the secure router 103, data will typically be exchanged in encrypted form. Such encrypted exchanged can be accomplished using a VPN.

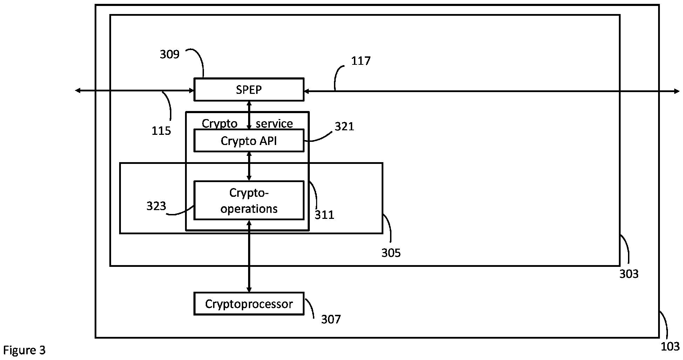

On receiving the data, the secure router 103 converts the data format to a general-purpose transport layer protocol, such as QUIC, and encrypts that data using an encryption method. In embodiments where the QUIC protocol is used, the data is transmitted using User Datagram Protocol (UDP). In such embodiments, multiple streams of data can be multiplexed such that they are transmitted in a single QUIC stream. The secure router 103 can employ a secure Performance-enhancing Proxy (SPEP) to format and encrypt the data. Further details of the operation of the secure router 103 are explained below in relation to figure 3.

The encrypted data from the secure router 103 are transmitted 117 to the first ground station 105, then to the satellite 107 and subsequently to the second ground station 109. From the second ground station 109, the encrypted data are transmitted 119 to a secure server 111. The secure server 111 can include components essentially similar to those of the first secure router 103 and can perform decryption of the data and re-conversion back to, for example, TCP protocol. The secure server 111 also includes components for performing the task of a server device.

The secure server 111 then transmits 121 the decrypted data to the destination server 113. The secure server 111 can be located at the premises of the second ground station 109, at the premises where the destination server 113 is located, or at some other location. In some embodiments, the secure server 111 can form part of the destination server 113. In some embodiments, the secure server 111 can be cloud-based.

In embodiments where the secure server 111 is located with the destination server 113, for example within a private network on which the destination server 113 is also present, then communications between the secure server 111 and the destination server 113 need not be encrypted. Conversely, in embodiments where the destination server 113 is remote from the secure server 111, data will typically be exchanged in encrypted form. Such encrypted exchanged can again be accomplished using a VPN.

For data flow from the destination server 113 to the user device 101, the process described above is reversed.

Figure 3 shows further details of the secure router 103. The secure router 103 includes a processing environment 303 comprising a processor and memory (not illustrated). In example embodiments, the processing environment can be based on ARM processors, such as an ARM cortex-A processor, which can be the ARM Cortex-A7 32-bit RISC core.

Within the processing environment 303 there is a secure processing part 305, in embodiments where the processing environment 303 is implemented on an ARM processor, the secure part 305 can be implemented using ARM TrustZone technology. A hardware cryptoprocessor 307 is included within the secure router 103. The hardware cryptoprocessor includes cryptographic keys. These keys can be either stored during production of the hardware cryptoprocessor 307, or generated by the device during operation, or both. The cryptographic keys can be used to authenticate remote devices such as the secure server 111 and/or provide asymmetric key pairs for key exchange processes and subsequently for encrypting and decrypting payload data that is to be transmitted across the link between the user device 101 and the secure server 111. In some embodiments the hardware cryptoprocessor is a Trusted Platform Module (TPM), in some embodiments the TPM is an ST33TPHF20SPI device. The secure processing environment can also be referred to as a secure enclave.

In some embodiments, both the secure processing environment 305 and the (unsecured) processing environment 303 run simultaneously on a single processing core.

Within the processing environment 303, a secure performance-enhancing-proxy (SPEP) 309 is configured to operate. In embodiments, the SPEP 309 is configured to operate within a secure operating system that is outside of the secure processing part 305. Typically, there is insufficient processing capability within the secure part 305 for the SPEP 309 to operate. Thus, by operating within a secure operating system, the SPEP 309 can be more secure that would be the case if it were operating in an un-secured operating system.

To provide an interface between the SPEP 309 and the hardware cryptoprocessor 307, a crypto service 311 is enacted. The crypto service 311 also provides a key management system for dealing with cryptographic keys from the hardware cryptoprocessor 307. The crypto service 311 is configured to operate partly in the secure processing part 305 and partly outside within the secure operating system.

The part of the crypto service 311 operating within the secure processing part 305 is a crypto operations part 323. Since the crypto operations part 323 operates within the secure processing part 305, it can securely deal with cryptographic keys and associated cryptographic data.

The part of the crypto service 311 operating outside of the secure processing part 305 is a crypto application programming interface (API) 321. The crypto API 321 provides a means for the SPEP 309 to interface with the crypto processor 307 via the crypto operations 323. In embodiments, the crypto API 321 is configured to be the only means by which the SPEP 309 can communicate with the cryptoprocessor 307 thereby providing a high degree of security for the cryptographic data. Moreover, since only the crypto-operations 323 can communicate with the cryptoprocessor 307, to the user the router 101 appears to be a standard router with no secure processing part 305 or cryptoprocessor 307.

Moreover, the skilled person will recognise that an SPEP 309 will not normally be configured to interface with a hardware cryptoprocessor 307 or a secure processing environment 305 and so the use of the crypto API 321 permits such an interface without significant changes to the SPEP 309. Thus, advantageously, the SPEP 309 can be standard software.

In contrast, if the API 321 were located within the secure processing environment 305, then the SPEP 309 software would require modification to enable interaction with the hardware cryptoprocessor 307 via the secure processing environment 305.

In operation, when transmitting data to the destination server 113, the secure router 103 will receive 115 data from the user device 101, typically formatted in TCP. The SPEP 309 will reformat the received data. The SPEP 309 will also request that the crypto service 311 to encrypt the reformatted data using a cryptographic key received from the cryptoprocessor 307. The SPEP will then transmit 117 the data to the first ground station 105. Typically, the data transmitted to the first ground station 105 will be formatted in UDP and encapsulated by the SPEP. The encapsulated data will be transmitted by tunnelling. When receiving data from the first ground station 105 at the user device 101, the process is reversed. Thus, encrypted data in UDP format is received from the first ground station 105, decrypted and reformatted and/or decapsulated to TCP and transmitted to the user device 101 in TCP format.

In operation, the secure router 103 will intercept and terminate all incoming connections, such as TCP connections, and transmit a tunnelled, encrypted, QUIC stream to the secure server 111. At the secure server 111, tunnelled traffic will be decapsulated and decrypted by the secure server 111. The secure server 111 will then route the decapsulated traffic over the internet as if it were the secure router 103. Typically, the secure server 111 will convert the decrypted data back to TCP format prior to transmission to the destination server 113.

When a response is received by the secure server 111 from the internet, the same process occurs in reverse using the established QUIC stream. If no QUIC stream is established when the response is received, then the process to establish one will again occur.

In further embodiments in accordance with Figure 3, a secure boot procedure and/or access control are employed in the secure router 103. Thus, in such embodiments, the integrity of the operating system files running on the secure operating system on the secure router 103 is verified at each boot instance of the software. In such embodiments, the authenticity of all files running in the processing environment 303, both in the secure 305 part and outside of it 303 can be verified. Typically, however, there is no verification performed on modules of applications running on the secure router 103 that are not related to the encryption or transmission of data. Moreover, there is also typically no verification performed on the hardware cryptoprocessor 307. In some embodiments, the cryptoprocessor 307 is configured to provide a hardware root-of-trust.

In some embodiments, in accordance with Figure 3, all steps that employ the cryptographic keys are undertaken in the secure processing environment 305.

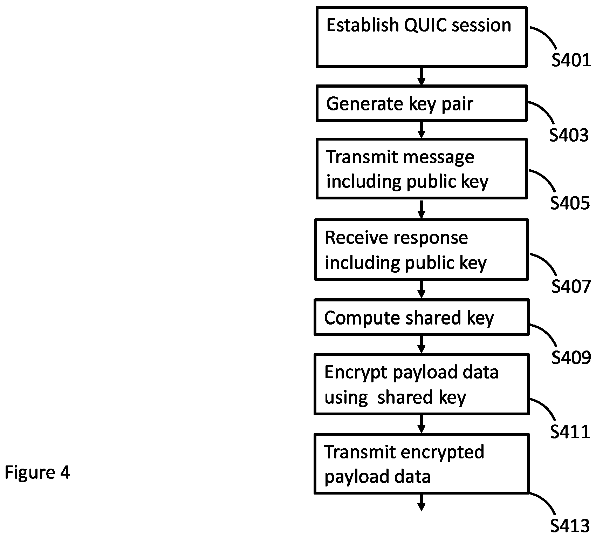

Figure 4 illustrates further details of the method of operation of the secure router 103 according to figure 3. The secure router 103 is configured to establish S401 a QUIC session that provides a data link between the secure router 103 and the secure server 111. The data link can be based on a QUIC transport-layer network protocol.

The cryptoprocessor 307 then generates S403 a public-private cryptographic key pair. The skilled person will recognise how cryptoprocessors can be used to generate such key pairs, and so further explanation will not be provided here. The trigger to generate the key pair can be receipt of a message at the secure router 103 indicating that the user device 101 wishes to establish a communication link with the destination server 113. Although not illustrated, the secure server 111 will also generate a similar cryptographic key pair. The trigger to generate the key pair at the secure server 111 can be receipt of a message at the secure server 111 indicating that the user device 101 wishes to establish a communication link with the destination server 113.

The secure router 103 then transmits S405 the public key from the key pair to the secure server 111 via the QUIC session. Similarly (not illustrated), the secure server 111 transmits its public key to the secure router 103 via the QUIC session, and this is received S407 at the secure router 103.

Typically, steps S405 and S407 are referred together as a process of key exchange, and more particularly as a process of asymmetric key exchange.

The secure router 103 (and similarly the secure server 111) can each compute S409 a shared key using the receive public keys and their corresponding private keys using known methods. The router can then encrypt S411 payload data receive from the user device 101 using the shared key and transmit S413 the encrypted data using the QUIC session.

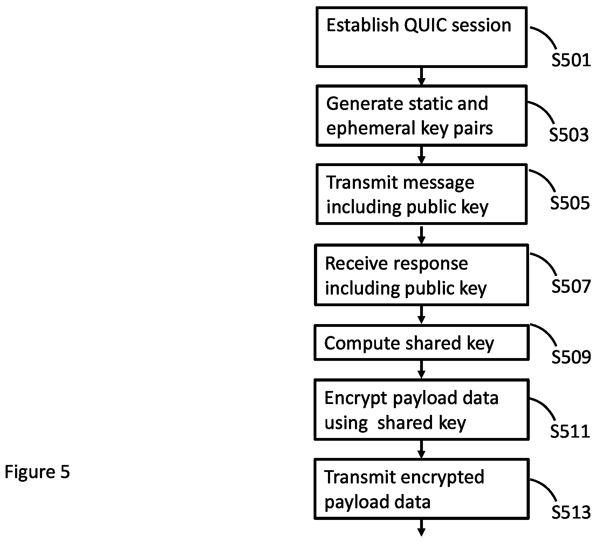

Figure 5 illustrates an alternative method of operation of the secure router 103 according to an embodiment. The secure router 103 is configured to establish S501 a QUIC session that provides a data link between the secure router 103 and the secure server 111. The data link can be based on a QUIC transport-layer network protocol. By using a QUIC session, the ISP of the satellite link that is employed need not install a PEP server at the gateway of the ISP to decapsulate encrypted traffic. Rather, the users of the satellite link need only QUIC tunnel their traffic through the ISP gateway for reception at the secure server 111.

The cryptoprocessor 307 then generates S503 an ephemeral public-private key pair and employs pre-shared certificates for authentication. The skilled person will recognise how cryptoprocessors can be used to generate such key pairs, and so further explanation will not be provided here. The trigger to generate the key pairs can be receipt of a message at the secure router 103 indicating that the user device 101 wishes to establish a communication link with the destination server 113. Although not illustrated, the secure server 111 will also generate similar static and ephemeral cryptographic key pairs. The trigger to generate the key pairs at the secure server 111 can be receipt of a message at the secure server 111 indicating that the user device 101 wishes to establish a communication link with the destination server 113.

The secure router 103 then transmits S505 the static public key and the ephemeral public key to the secure server 111 via the QUIC session. Similarly (not illustrated), the secure server 111 transmits its public static and public ephemeral keys to the secure router 103 via the QUIC session, and this is received S507 at the secure router 103.

The secure router 103 (and similarly the secure server 111) can each authenticate the other using the receive public static key and their corresponding private static key. The secure router 103 and secure server 111 can then compute S509 a shared key using the receive public ephemeral keys and their corresponding private ephemeral keys using known methods. The router can then encrypt S511 payload data receive from the user device 101 using the shared key and transmit S513 the encrypted data using the QUIC session.

Thus, in embodiments where both static and ephemeral keys are employed, the static keys can be used to provide a level of authentication that identifies the secure server 111 to the secure router 103 and vice versa. The ephemeral keys ensure that, if the static part is compromised after some transactions have taken place, then an eavesdropper will still not be able to derive the shared key since the ephemeral part will change between different sessions. This process is typically called forward secrecy. The skilled person will be familiar with the process of forward secrecy and so further explanation will not be provided here.

In some embodiments, TLS protocol version 1.3 is employed when the secure router 103 and secure server 111 first communicate with each other in a session. In such embodiments, the handshake protocol can be used to permit the secure router 103 and secure server 111 to negotiate a protocol version, select a cryptographic algorithm, authenticate each other and establish the shared secret key. In some embodiments that use TLS 1.3, a key exchange mode employing pre-shared key (PSK) (the static key) and elliptic curve Diffie-Hellmann exchange (EC(DHE)) (the ephemeral key) is employed.

In some embodiments the EC(DHE) can comprise the X25519 or P-256 key exchange algorithms. In such embodiments, owing to the limited set of choices available, the secure router 103 can choose to send Diffie-Hellmann key shares on the first trip in the handshake process. By doing this, the secure server 111 can learn the shared key and transmit encrypted data one round trip earlier than would otherwise be possible. Thus, such embodiments permit a more efficient process for establishing secure communications.

In embodiments where TLS 1.3 is employed, zero-round trip time resumption (0-RTT) data can be used. In such embodiments with PSK, the secure router 103 can send encrypted data earlier in the handshake procedure than would otherwise be possible. Thus, such embodiments permit a more efficient process for establishing secure communications.

Typically, when using TLS 1.3 cryptographic primitives (i.e. low-level cryptographic algorithms that are used to build the cryptographic protocol) are received from a software library, such as open SSL or other libraries. Thus, a software library is used to perform cryptographic operations. In contrast, in embodiments as described herein, the hardware cryptoprocessor 307 is used to perform these cryptographic operations.

Since the hardware cryptoprocessor 307 is a hardware device, it is more resistant to attack than a software device. Thus, the architecture of the secure router 103 provides an improved level of security in comparison to a purely software-based implementation of an encryption system. Moreover, since the secure router 103 employs a secure processing environment and the private encryption keys remain within this environment, the level of security of the secure router 103 is further improved.

Moreover, in embodiments where the cryptoprocessor 307 comprises a Trusted platform module (TPM) and/or the secure processing environment 305 comprises ARM TrustZone security extensions, the high level of security can be achieved using relatively simple, cheap and compact components. Moreover, such TPM devices can be certified devices wherein the certificate attests that the TPM meets a set of compliance and security requirements.

Further, by employing QUIC in the manner described, the set-up of the QUIC stream can be negotiated in a single round-trip since the handshake procedure is simple. Moreover, QUIC does not require that all data packets in a stream are processed in any particular order. Thus, multiple TCP flows can be permitted within a single encrypted QUIC session.

In further embodiments in combination with any of the previously described embodiments, a public key infrastructure (PKI) can be used. In such embodiments a trusted third party is additionally used as a certificate authority (CA). Either the secure router 103 or the secure server 111 or both can obtain a digital certificate from the CA to authenticate the other party. When using the PKI, all cryptographic material, including certificates and cryptographic keys will be securely stored in the hardware cryptographic processor 307. The skilled person will understand how to enact such authentication and storage, and so further explanation will not be provided here.

In some embodiments, the operating system files on which the SPEP 309 operates are immutable. In further embodiments, the files that provide the crypto service 311 are also immutable. Thus, the secure router 103 is highly secure from attacks that compromise the software.

In some embodiments, the shared key can remain valid until communication between the user device 101 and the destination server 113 ceases. In alternative embodiments, a time limitation can be placed on the shared key and it can be rendered invalid at the end of the time limitation. In some embodiments, the time limitation can be an hour.

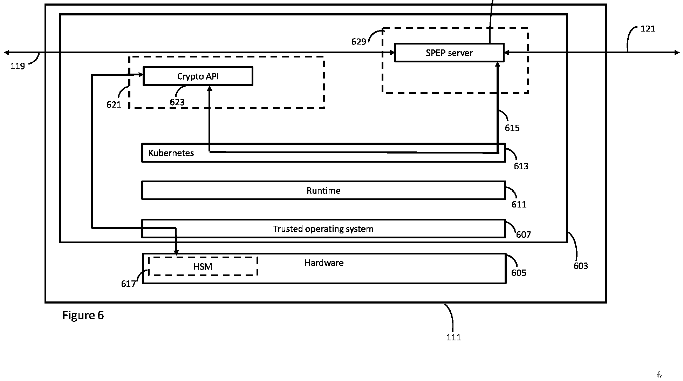

Figure 6 illustrates details of the architecture of the secure server 111 according to some embodiments. The secure server 111 comprises a processing environment 603. The processing environment 603 hosts first and second secure containers 621 and 629. The first and second secure containers 621, 629 comprise software packages that have been isolated both from other software and other processes running within the processing environment 603. The first secure container 621 is configured to host a crypto API 623. As with the crypto API 321 in the secure router 103, the crypto API 623 in the secure server 111 provides a means for interfacing between a hardware cryptoprocessor and SPEP software.

In the case of the secure server 111, the SPEP software is a secure PEP server 631 running in the second secure container 629. The SPEP server 631 communicates with the crypto API 623 via a Kubernates container orchestration system 613. The skilled person will be familiar with software orchestration systems and so further details will not be provided here.

By using Kubernetes with additional security settings, a single secure server 111 can simultaneously manage multiple transmissions such that each transmission is executed in a separate container which hosts a separate instance of the SPEP server 631. As a result, each instance of the SPEP 631 is fully isolated from the others. Thus, multiple user devices 101 can be supported simultaneously using a single secure server 111.

The processing environment 603 also comprises a Runtime environment 607 and a trusted operating system 607. The skilled person will be familiar with these features and so further details will not be provided here.

The secure server 111 also comprises hardware, including one or more processors, memory and a Hardware Security Module (HSM) 617. The HSM 617 is a hardware computing device that stores and manages digital keys, performs encryption and decryption functions, digital signature verification, authentication, and other cryptographic functions.

The HSM 617 may use one or more smart cards containing cryptographic information. In operation, the HSM 617 generates and stores cryptographic data. In some embodiments, the HSM 617 is a FIPS140-2 Level 3 certified European TSM

In embodiments, the crypto API 623 is configured to be the only means by which the SPEP server 631 can communicate with the HSM 617, thereby providing a high degree of security for the cryptographic data.

By using the HSM 617 in place of the TPM as is used in the secure router 103, a higher processing power is available at the cryptoprocessor 617. This is advantageous since the secure server 111 will tend to provide services to multiple user devices 101 and so will require a PEP instance for each such device.

In some embodiments, the secure server 111 employs an AMD EPYC 7002 series generation CPU. The serve may also comprise a TPM to provide secure boot capability.

In some embodiments, the secure server 111 employs Kata-container runtime to provide isolation between the containers and, when combined with an AMD-SEV CPU, it provides a confidential computing environment inside encrypted virtual machines (VMs) to the SPEP server 631 and the cryptographic API 623.

In operation, when transmitting data to the destination server 113, the secure server 111 will receive 119 data from the second ground station 109, typically formatted in UDP via QUIC as described above. The secure server 111 will decrypt and reformat the received data using a shared cryptographic key derived in a manner as explained above and transmit 121 the data to the destination server 113. Typically, the data transmitted to the destination server 113 will be formatted in TCP. When transmitting data from the destination server 113 to the user device 101, the process is reversed. Thus, data in TCP format is received from the destination server 113 encrypted and reformatted to UDP and transmitted to the second ground station 109 in UDP via QUIC.

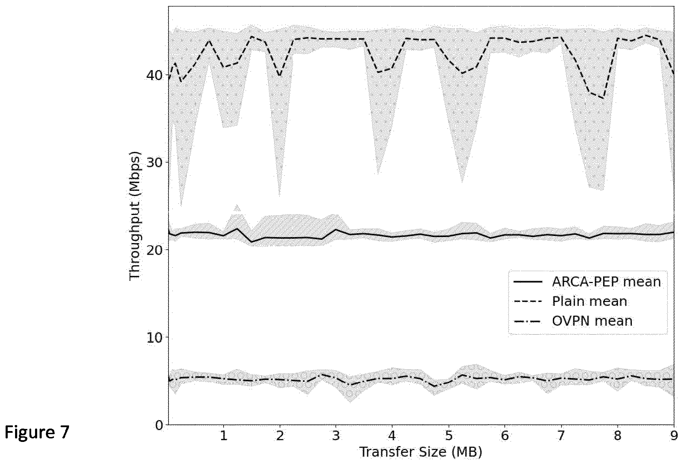

Figure 7 illustrates results obtained using the system described in embodiments in comparison to prior art systems. The results of Figure 7 are achieved by transmitting data via a satellite link in the system as illustrated in Figure 2.

The chart of Figure 7 illustrates an example of throughput that is achieved in Megabits per second versus file transfer size. The solid line indicates the mean performance achieved using the system as described in embodiments, and the grey area surrounding this mean indicates the performance achieved during different test runs. As can be seen, an average throughput of around 22MB/s is achieved for all file sizes. The dashed line indicates mean throughput in a corresponding system with no encryption enabled. Again, the grey area around the line indicates the performance achieved during different test runs. As is clear from the dashed line, the mean performance without encryption is around 42MB/s.

In comparison, the dot-dash line indicates the performance of the same system when a priorart open-source VPN is implemented. As can be seen, an average performance of around 6MB/s is achieved. Thus, it is clear from this figure that the performance achieved using the system as described in embodiments offers a large improvement over a VPN and around half the throughput achieved with an unencrypted system.

Embodiments can include features that are embedded in a computer program product, which, when loaded in an information processing system, is able to carry out the methods described. Computer program means or computer program in the present context mean any expression, in any language, code or notation, of a set of instructions intended to cause a system having an information processing capability to perform a particular function either directly or after conversion to another language. Such a computer program can be stored on a computer or machine-readable medium allowing data, instructions, messages or message packets, and other machine readable information to be read from the medium. The computer or machine-readable medium may include non-volatile memory, such as ROM, Flash memory, Disk drive memory, CD-ROM, and other permanent storage. Additionally, a computer or machine-readable medium may include, for example, volatile storage such as RAM, buffers, cache memory, and network circuits. Furthermore, the computer or machine-readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. A method of providing encrypted communications for transmission via satellite, the method comprising:
providing (S401) a transport-layer session with a secure server (111) via satellite;
generating (S403) a cryptographic session public-private key pair using a secure, hardware-based cryptoprocessor (307), wherein the hardware cryptoprocessor (307) is configured to communicate with the transport-layer session via a software interface (323) operating in a secure processing environment (305), and wherein the private encryption key remains within the secure processing environment;
transmitting (S405) a message including the public session key to the secure server (111) via the transport-layer session;
receiving (S407) a response from the secure server (111), the response comprising a public key;
computing (S409), at the hardware-based cryptoprocessor (307), a shared key using the received public key and the generated private key;
encrypting (S411) payload data using the shared key; and
transmitting (S413) the encrypted payload data to the secure server (111).

2. The method of claim 1, wherein the transport-layer session operates outside of the secure processing environment (305) and the software interface (323) operating in the secure processing environment (305) communicates with the transport-layer session indirectly via a second software interface operating outside of the secure processing environment (305).

3. The method of claim 1, wherein the transport-layer session is a QUIC session and the method further comprising receiving payload data to be transmitted in the form of a TCP connection and transmitting the received payload data via an encrypted QUIC stream.

4. The method of any preceding claim, wherein the generated public-private key pair comprises a static key pair and an ephemeral key pair and wherein the transmission of the message (S405) comprises transmitting a message including the static public key and transmitting a message including the ephemeral public key.

5. The method of any preceding claim, wherein the transmission (S405) of a message including the public session key forms part of a TLS version 1.3 handshake procedure.

6. The method of claim 5, wherein the public session key is transmitted in the first message of the handshake procedure.

7. The method of any of claims 1 or 2, wherein the method is partly performed in software and wherein the integrity of the software is verified upon booting using information from the hardware-based cryptoprocessor.

8. The method according to claim 7, wherein the secure processing environment (305) in combination with the hardware-based cryptoprocessor (307) carries out all processes that use the cryptographic keys .

9. The method according to claim 8, wherein the software is immutable.

10. A secure router apparatus (103) configured to perform encrypted communications via satellite, the apparatus comprising:
a hardware-based cryptoprocessor (307), and
a processing environment (303), the secure router apparatus (103) being configured to:
provide a transport-layer session with a secure server (111) via satellite;
generate a cryptographic public-private key pair at the hardware-based cryptoprocessor (307) wherein the hardware cryptoprocessor (307) is configured to communicate with the transport-layer session via a software interface (323) operating in a secure processing environment (305), and wherein the private encryption key remains within the secure processing environment;
transmit a message including the public key to the secure server (111) via the transport-layer session;
receive a response from the secure server (111), the response comprising a public key;
compute a shared key using the received public key and the generated private key;
encrypt payload data using the shared key; and
transmit the encrypted payload data to the secure server (111).

11. A secure router (103) according to claim 10, wherein the hardware cryptoprocessor (307) comprises a Trusted Platform Module, TPM.

12. A secure router (103) according to claim 10 or 11, wherein the hardware cryptoprocessor (307) is configured to communicate with the transport-layer session via a software interface (323) operating in the secure processing environment (305) that is implemented using an ARM TrustZone security extension.

13. A computer program product comprising computer readable instructions which, when implemented on a system comprising a processor and a hardware cryptoprocessor (307) perform all of the steps of the method of any of claims 1-9.

14. A computer readable medium comprising the computer program of claim 13.

## Patentansprüche

1. Verfahren zum Bereitstellen verschlüsselter Kommunikationen für eine Übertragung über einen Satelliten, wobei das Verfahren umfasst:
Bereitstellen (S401) einer Transport-Ebenen-Sitzung mit einem sicheren Server (111) über einen Satelliten;
Generieren (S403) eines öffentlich-privaten Schlüsselpaars für eine kryptographische Sitzung, wobei ein sicherer, hardwarebasierter Kryptoprozessor (307) verwendet wird, wobei der Hardware-Kryptoprozessor (307) dazu eingerichtet ist, mit der Transport-Ebenen-Sitzung über eine Softwareschnittstelle (323) zu kommunizieren, welche in einer sicheren Verarbeitungsumgebung (305) betrieben wird, und wobei der private Verschlüsselungsschlüssel innerhalb der sicheren Verarbeitungsumgebung verbleibt;
Übermitteln (S405) einer Nachricht, welche den öffentlichen Sitzungsschlüssel umfasst, an den sicheren Server (111) über die Transport-Ebenen-Sitzung;
Erhalten (S407) einer Antwort von dem sicheren Server (111), wobei die Antwort einen öffentlichen Schlüssel umfasst;
Berechnen (S409), bei dem hardwarebasierten Kryptoprozessor (307), eines geteilten Schlüssels unter Verwendung des erhaltenen öffentlichen Schlüssels und des generierten privaten Schlüssels;
Verschlüsseln (S411) von Nutzdaten unter Verwendung des geteilten Schlüssels; und
Übermitteln (S413) der verschlüsselten Nutzdaten an den sicheren Server (111).

2. Verfahren nach Anspruch 1, wobei die Transport-Ebenen-Sitzung außerhalb der sicheren Verarbeitungsumgebung (305) betrieben wird und die Softwareschnittstelle (323), welche in der sicheren Verarbeitungsumgebung (305) betrieben wird, mit der Transport-Ebenen-Sitzung indirekt über eine zweite Softwareschnittstelle kommuniziert, welche außerhalb der sicheren Verarbeitungsumgebung (305) betrieben wird.

3. Verfahren nach Anspruch 1, wobei die Transport-Ebenen-Sitzung eine QUIC-Sitzung ist und das Verfahren ferner ein Erhalten von Nutzdaten, welche zu übermitteln sind, in der Form einer TCP-Verbindung und ein Übermitteln der erhaltenen Nutzdaten über einen verschlüsselten QUIC-Stream umfasst.

4. Verfahren nach einem vorhergehenden Anspruch, wobei das generierte öffentlich-private Schlüsselpaar ein statisches Schlüsselpaar und ein vorübergehendes Schlüsselpaar umfasst und wobei das Übermitteln der Nachricht (S405) ein Übermitteln einer Nachricht, welche den statischen öffentlichen Schlüssel umfasst, und ein Übermitteln einer Nachricht umfasst, welche den vorübergehenden öffentlichen Schlüssel umfasst.

5. Verfahren nach einem vorhergehenden Anspruch, wobei das Übermitteln (S405) einer Nachricht, welche den öffentlichen Sitzungsschlüssel umfasst, einen Teil eines TLS-Version-1.3-Handschlagvorgangs bildet.

6. Verfahren nach Anspruch 5, wobei der öffentliche Sitzungsschlüssel in der ersten Nachricht des Handschlagvorgangs übermittelt wird.

7. Verfahren nach einem der Ansprüche 1 oder 2, wobei das Verfahren teilweise in einer Software durchgeführt wird und wobei die Integrität der Software bei einem Startvorgang verifiziert wird, wobei Informationen von dem hardwarebasierten Kryptoprozessor verwendet werden.

8. Verfahren nach Anspruch 7, wobei die sichere Verarbeitungsumgebung (305) in Kombination mit dem hardwarebasierten Kryptoprozessor (307) alle Prozesse ausführt, welche die kryptographischen Schlüssel verwenden.

9. Verfahren nach Anspruch 8, wobei die Software unveränderlich ist.

10. Sichere Routervorrichtung (103), welche dazu eingerichtet ist, verschlüsselte Kommunikationen über einen Satelliten durchzuführen, wobei die Vorrichtung umfasst:
einen hardwarebasierten Kryptoprozessor (307), und
eine Verarbeitungsumgebung (303), wobei die sichere Routervorrichtung (103) dazu eingerichtet ist:
eine Transport-Ebenen-Sitzung mit einem sicheren Server (111) über einen Satelliten bereitzustellen;
ein kryptographisches öffentlich-privates Schlüsselpaar an dem hardwarebasierten Kryptoprozessor (307) zu generieren, wobei der Hardware-Kryptoprozessor (307) dazu eingerichtet ist, mit der Transport-Ebenen-Sitzung über eine Softwareschnittstelle (323) zu kommunizieren, welche in einer sicheren Verarbeitungsumgebung (305) betrieben wird, und wobei der private Verschlüsselungsschlüssel innerhalb der sicheren Verarbeitungsumgebung verbleibt;
eine Nachricht umfassend den öffentlichen Schlüssel an den sicheren Server (111) über die Transport-Ebenen-Sitzung zu übermitteln;
eine Antwort von dem sicheren Server (111) zu erhalten, wobei die Antwort einen öffentlichen Schlüssel umfasst;
einen geteilten Schlüssel zu berechnen, wobei der erhaltene öffentliche Schlüssel und der generierte private Schlüssel verwendet werden;
Nutzdaten zu verschlüsseln, wobei der geteilte Schlüssel verwendet wird; und
die verschlüsselten Nutzdaten an den sicheren Server (111) zu übermitteln.

11. Sicherer Router (103) nach Anspruch 10, wobei der Hardware-Kryptoprozessor (307) ein Trusted Platform Module, TPM, umfasst.

12. Sicherer Router (103) nach Anspruch 10 oder 11, wobei der Hardware-Kryptoprozessor (307) dazu eingerichtet ist, mit der Transport-Ebenen-Sitzung über eine Softwareschnittstelle (323) zu kommunizieren, welche in der sicheren Verarbeitungsumgebung (305) betrieben wird, welche implementiert wird, wobei eine ARM TrustZone-Sicherheitserweiterung verwendet wird.

13. Computerprogramm-Produkt, welches computerlesbare Instruktionen umfasst, welche, wenn sie auf einem System implementiert werden, welches einen Prozessor und einen Hardware-Kryptoprozessor (307) umfasst, alle Schritte des Verfahrens nach einem der Ansprüche 1 bis 9 ausführen.

14. Computerlesbares Medium umfassend das Computerprogramm nach Anspruch 13.

## Revendications

1. Procédé de fourniture de communications cryptées pour transmission via satellite, le procédé comprenant :
la fourniture (S401) d'une session de couche de transport avec un serveur sécurisé (111) via satellite ;
la génération (S403) d'une paire de clés publique-privée de session cryptographique à l'aide d'un cryptoprocesseur sécurisé (307) basé sur du matériel, dans lequel le cryptoprocesseur matériel (307) est configuré pour communiquer avec la session de couche de transport via une interface logicielle (323) opérant dans un environnement de traitement sécurisé (305), et dans lequel la clé de cryptage privée reste dans l'environnement de traitement sécurisé ;
la transmission (S405) d'un message comportant la clé de session publique au serveur sécurisé (111) via la session de couche de transport ;
la réception (S407) d'une réponse provenant du serveur sécurisé (111), la réponse comprenant une clé publique ;
le calcul (S409), au niveau du cryptoprocesseur (307) basé sur du matériel, d'une clé partagée en utilisant la clé publique reçue et la clé privée générée ;
le cryptage (S411) de données de charge utile à l'aide de la clé partagée ; et
la transmission (S413) des données de charge utile cryptées au serveur sécurisé (111).

2. Procédé selon la revendication 1, dans lequel la session de couche de transport opère en dehors de l'environnement de traitement sécurisé (305) et l'interface logicielle (323) opérant dans l'environnement de traitement sécurisé (305) communique indirectement avec la session de couche de transport via une seconde interface logicielle opérant en dehors de l'environnement de traitement sécurisé (305).

3. Procédé selon la revendication 1, dans lequel la session de couche de transport est une session QUIC et le procédé comprenant en outre la réception de données de charge utile à transmettre sous la forme d'une connexion TCP et la transmission des données de charge utile reçues via un flux QUIC crypté.

4. Procédé selon une quelconque revendication précédente, dans lequel la paire de clés publique-privée générée comprend une paire de clés statiques et une paire de clés éphémères et dans lequel la transmission du message (S405) comprend la transmission d'un message comportant la clé publique statique et la transmission d'un message comportant la clé publique éphémère.

5. Procédé selon une quelconque revendication précédente, dans lequel la transmission (S405) d'un message comportant la clé de session publique fait partie d'une procédure d'établissement de liaison TLS version 1.3.

6. Procédé selon la revendication 5, dans lequel la clé de session publique est transmise dans le premier message de la procédure d'établissement de liaison.

7. Procédé selon l'une quelconque des revendications 1 ou 2, dans lequel le procédé est partiellement réalisé dans un logiciel et dans lequel l'intégrité du logiciel est vérifiée lors de l'amorçage à l'aide d'informations provenant du cryptoprocesseur basé sur du matériel.

8. Procédé selon la revendication 7, dans lequel l'environnement de traitement sécurisé (305) en combinaison avec le cryptoprocesseur (307) basé sur du matériel effectue tous les processus qui utilisent les clés cryptographiques.

9. Procédé selon la revendication 8, dans lequel le logiciel est inaltérable.

10. Appareil routeur sécurisé (103) configuré pour réaliser des communications cryptées via satellite, l'appareil comprenant :
un cryptoprocesseur (307) basé sur du matériel, et
un environnement de traitement (303), l'appareil routeur sécurisé (103) étant configuré pour :
fournir une session de couche de transport avec un serveur sécurisé (111) via satellite ;
générer une paire de clés publique-privée cryptographiques au niveau du cryptoprocesseur (307) basé sur du matériel, dans lequel le cryptoprocesseur matériel (307) est configuré pour communiquer avec la session de couche de transport via une interface logicielle (323) opérant dans un environnement de traitement sécurisé (305), et dans lequel la clé de cryptage privée reste dans l'environnement de traitement sécurisé ;
transmettre un message comportant la clé publique au serveur sécurisé (111) via la session de couche de transport ;
recevoir une réponse en provenance du serveur sécurisé (111), la réponse comprenant une clé publique ;
calculer une clé partagée en utilisant la clé publique reçue et la clé privée générée ;
crypter des données de charge utile à l'aide de la clé partagée ; et
transmettre les données de charge utile cryptées au serveur sécurisé (111).

11. Routeur sécurisé (103) selon la revendication 10, dans lequel le cryptoprocesseur matériel (307) comprend un module de plateforme fiable, TPM.

12. Routeur sécurisé (103) selon la revendication 10 ou 11, dans lequel le cryptoprocesseur matériel (307) est configuré pour communiquer avec la session de la couche de transport via une interface logicielle (323) opérant dans l'environnement de traitement sécurisé (305) qui est mis en œuvre à l'aide d'une extension de sécurité ARM TrustZone.

13. Produit-programme d'ordinateur comprenant des instructions lisibles par ordinateur qui, lorsqu'elles sont mises en œuvre sur un système comprenant un processeur et un cryptoprocesseur matériel (307), réalisent toutes les étapes du procédé selon l'une quelconque des revendications 1 à 9.

14. Support lisible par ordinateur comprenant le programme d'ordinateur selon la revendication 13.
